# FASCICULE DE BREVET EUROPEEN

(11) **EP 1 105 283 B1**
(45) Date de publication et mention de la délivrance du brevet: **02.04.2003**
(21) Numéro de dépôt: 99939275.6
(22) Date de dépôt: 16.08.1999
(51) Int. Cl.: B30B 9/32, B29B 17/00

(54) **COMPACTEUR A USAGE DOMESTIQUE**
VERDICHTER IM HAUSHALTSBEREICH
HOME COMPACTOR

(30) Priorité: 19.08.1998 BE 9800611; 16.03.1999 BE 9900183
(43) Date de publication de la demande: 13.06.2001
(73) Titulaire: Adam, Claude, B-6530 Thuin (BE)
(72) Inventeur: Adam, Claude, B-6530 Thuin (BE)
(74) Mandataire: Colens, Alain
(86) Numéro de dépôt international: BE9900110
(87) Numéro de publication internationale: WO00010798

(56) Documents cités:
- EP-A- 0 554 646
- DE-U- 9 115 065
- FR-A- 2 750 073
- US-A- 3 079 856
- US-A- 3 388 422
- US-A- 4 334 469
- US-A- 5 243 903
- US-A- 5 765 473

## Description

La présente invention se rapporte à un compacteur, ou dispositif d'écrasement, pour récipient compressible, en particulier en plastique, en métal ou en carton.

Le compacteur selon l'invention peut être avantageusement mais pas uniquement, destiné à un usage domestique et peut constituer ainsi un ustensile particulièrement pratique à portée de main de la ménagère.

On sait que l'utilisation de bouteilles en plastique s'est généralisée, ainsi que l'utilisation de boîtes métalliques ("canettes") pour boissons. Une fois vidés, ces récipients sont encombrants et il est donc souvent nécessaire de diminuer leur volume. Différents compacteurs existent à cette fin, présentant cependant divers désavantages.

L'art antérieur est représenté notamment par les documents de brevet US 3.009.414, FR-A-2689034, FR-A-2750073, EP-A-0554646 , JP 9234597 et US 5765473.

Le document US 3.079.856 décrit plus particulièrement un compacteur comprenant un bâti fixe et un élément mobile coulissant à l'intérieur de ce bâti et apte à contenir un récipient. Un moteur électrique dans le bâti fixe doit cependant être prévu pour actionner l'élément mobile et ainsi compresser le récipient entre cet élément et le bâti.

Le but de la présente invention est de proposer un compacteur, essentiellement pour récipients destinés aux liquides, plus simple et néanmoins plus efficace, plus léger, plus compact et plus solide.

La présente invention propose un compacteur pour récipient constitué d'un bâti fixe et d'un élément mobile apte à coulisser à l'intérieur ou à l'extérieur du bâti fixe, et à accueillir le récipient entre une partie supérieure de l'élément fixe et une partie supérieure de l'élément mobile. L'élément mobile peut être soumis à une force verticale vers le bas, force appliquée à sa partie inférieure , présente sous la partie supérieure du bâti fixe, pour provoquer un coulissement de l'élément mobile et la compression du récipient entre les faces opposées desdites parties supérieures . L'invention est caractérisée ne ce que la force verticale vers le bas est appliquée par le pied d'un utilisateur sur un élément d'appui prévu à ladite partie inférieure de l'élément mobile.

D'autres caractéristiques de l'invention sont décrites dans les revendications dépendantes qui sont annexées.

La présente invention a donc pour but de proposer un compacteur très simple composé de deux éléments, par exemple deux corps tubulaires télescopiques dont l'un peut être posé sur le sol et l'autre, mobile, peut être actionné directement par le pied, pour passer d'une position ouverte ou déployée à une position fermée. Cette opération provoque l'écrasement de tout conteneur placés entre les deux éléments.

Le compacteur est donc constitué d'un bâti fixe et d'un élément mobile, solidaire au bâti mais apte à coulisser à travers une partie du bâti fixe. Dans sa forme déployée ou ouverte, ie compacteur peut accueillir un récipient entre la partie supérieure de l'élément fixe, jouant le rôle d'une enclume et une partie supérieure de l'élément mobile jouant le rôle d'un piston plongeur. L'élément mobile est alors soumis à une force verticale vers le bas, force appliquée à sa partie inférieure, présente sous la partie supérieure de l'élément fixe. Le récipient est ainsi comprimé entre les deux parties supérieures, entre leurs faces opposées, par une force exercée vers le bas en un point situé à la partie inférieure de l'élément mobile coulissant, située au dessus de la partie inférieure de l'élément fixe.

La force sur cette partie mobile est avantageusement appliquée par le pied de l'utilisateur, le bâti fixe se trouvant placé sur le sol.

Le principe sur lequel repose un aspect de la présente invention consiste à compresser un récipient en exercant une force avec le pied, et donc potentiellement avec le poids du corps de l'utilisateur, le pied étant situé sous le récipient et exercant sa force sur un étrier ou une pédale comportant au moins une branche directement reliée à l'élément mobile compresseur situé au dessus du récipient, la ou les branches coulissants dans un bâti fixe sur lequel est placé ledit récipient.

La partie coulissante comprend un élément compresseur supérieur, par exemple sous la forme d'une plaque ou d'un anneau, apte à compresser verticalement le récipient.
Cet élément peut épouser plus ou moins partiellement la forme de la partie supérieure du récipient pour préserver la stabilité verticale de celui-ci lors de la compression. L'élément annulaire ou la plaque peut ainsi avantageusement présenter une ouverture apte à recevoir le goulot d'une bouteille en plastique.

L'élément compresseur supérieur est relié, de préférence rigidement, à un élément d'appui inférieur, jouant le rôle de pédale.

La liaison peut être effectuée par une ou plusieurs branches sous forme de tiges ou tubes coulissants dans une partie supérieure du bâti fixe, ledit bâti étant au moins partiellement ouvert et logeant l'élément d'appui sur lequel la force de compression s'exerce. Les tiges ou tubes peuvent être métalliques.

Avantageusement la liaison peut aussi résulter d'une partie latérale de paroi cylindrique coulissant sur une partie latérale complémentaire du bâti fixe.

Le bâti ou partie fixe contient l'élément d'appui et est apte à le contenir durant sa course lors de l'opération de compression. Le bâti fixe présente un évidement latéral apte à permettre au pied d'exercer sa force durant la course complète de l'élément coulissant. La bâti comprend avantageusement une embase pour assurer sa stabilité sur le sol.

Le bâti fixe peut être réalisé en plastique rigide, par exemple sous la forme de deux demi-coques identiques, moulées et assemblées, présentant éventuellement des nervures de renforcement internes. Selon un mode de réalisation, ces demi-coques assemblées peuvent contenir des guides internes latéraux, par exemple sous la forme de canaux ou gorges, pour permettre un coulissement aisé des tubes ou tiges de la partie coulissante reliant la plaque de compression et la pédale.

L'invention sera mieux comprise et les avantages de celle-ci apparaîtront plus clairement au cours de la description explicative qui suit et présentée en se référant aux dessins schématiques annexés, fournis uniquement à titre d'exemple pour illustrer des modes de réalisation de l'invention.

Dans ces dessins :
- les fig. la et 1b sont des vues en coupe d'un compacteur selon l'invention;
- la fig. 2 est une vue représentant le compacteur de la fig. 1 déployé pour accueillir une bouteille à compacter et permettre l'engagement initial du pied de l'utilisateur;
- la fig. 3 représente le compacteur en position abaissé en dans lequel la bouteille est écrasée et le pied en position de fin de course,
- la fig. 4 représente schématiquement une variante dans laquelle les corps tubulaire sont remplacés par une double armature approximativement en U renversé dont les bases coulissent l'une dans l'autre,
- la fig. 5 représente schématiquement une autre variante dans laquelle les corps tubulaires sont remplacé par des tubes métalliques pliés, supportant un élément annulaire pour recevoir le goulot d'une bouteille, un élément de support pour recevoir la base de la bouteille et un élément d'appui pour exercer la force verticale avec le pied.
- la fig. 6a représente une autre variante d'un compacteur selon l'invention
- la fig. 7 représente le bâti fixe de la fig. 6 formé de deux demi-coquilles identiques à assembler
- les figs. 8a et 8b illustre une pédale vue du haut et vue du bas respectivement

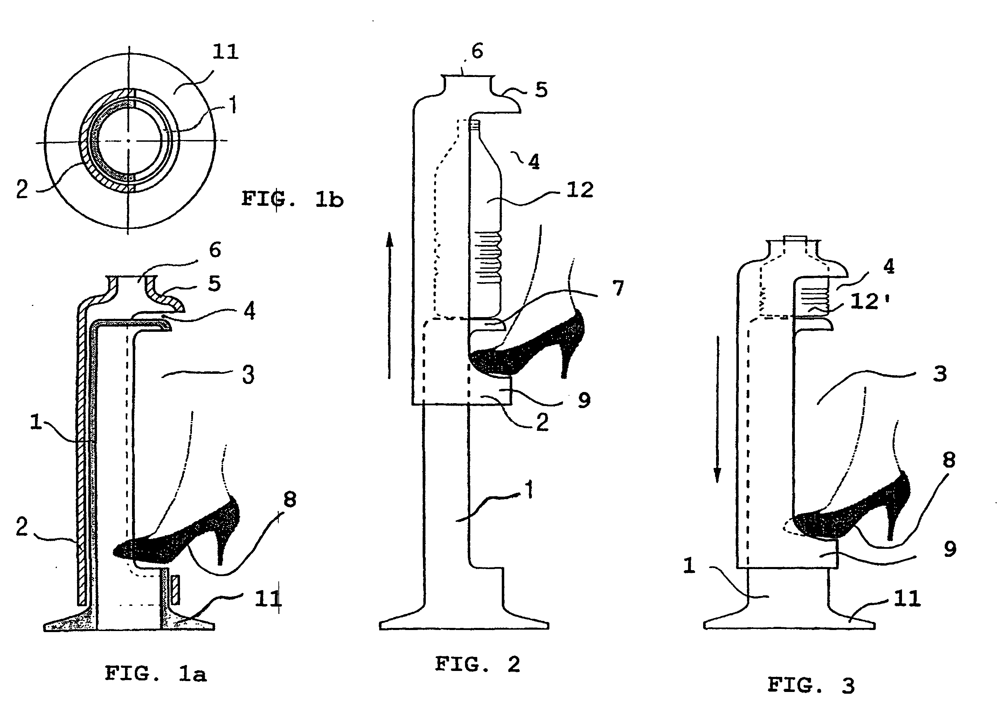

La fig. 1a est une vue en coupe en élévation d'un compacteur selon un mode de réalisation de l'invention. La fig. 1b est une coupe transversale vue en plan.

Comme il ressort de ces figures, le compacteur de bouteilles en plastique est composé d'un corps tubulaire 1 dont l'embase 11 est posé sur le sol, la partie supérieure 5 est au moins partiellement refermée. La paroi cylindrique latérale est découpée d'une longue ouverture verticale elliptique 3 s'étendant latéralement jusqu'à environ la moitié de la paroi cylindrique, permettant l'introduction et la poussée vers le bas de la partie avant du pied de l'utilisateur.

Autour du corps tubulaire 1 coulisse le corps tubulaire partiellement fermé en haut 2, sa paroi cylindrique latérale est également découpée d'une longue ouverture verticale elliptique 4 semblable et complémentaire à l'ouverture du corps tubulaire 1.

La bouteille 12 débouchonnée est engagée debout dans l'ouverture 4 en levant de la main le corps tubulaire 2, le col pouvant partiellement s'engager dans la partie supérieure 5 munie d'une ouverture 8 appropriée.

Cette ouverture 4 reçoit également le pied 8 dans sa partie inférieure juste en dessous de la partie supérieure 7 du corps cylindrique 1.

La poussée verticale exercée par le pied sur le bord inférieur découpé 9 de la paroi cylindrique du corps tubulaire 2 fait descendre celui-ci et comprime ainsi la bouteille entre les faces opposées de la partie supérieure 5 et de la partie supérieure dessus du corps tubulaire 1 et le dessous de la partie supérieure du corps tubulaire 2.

La base supérieure du corps tubulaire 2 est munie d'une ouverture circulaire 6 qui centre le goulot de la bouteille pendant l'écrasement et permet d'y replacer le bouchon préalablement enlevé, ce qui améliore encore le résultat de l'écrasement.

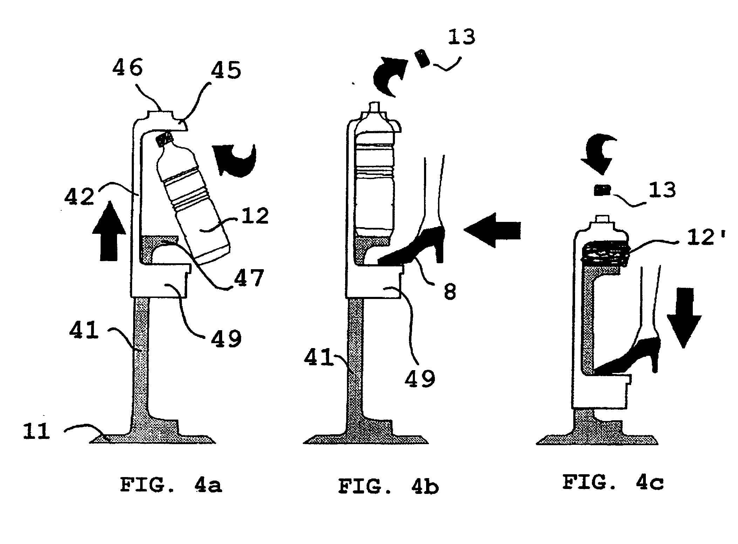

Les figs. 4a à 4b illustrent l'opération d'écrasement d'une bouteille avec un compacteur constituant une variante de l'invention. L'élément 41 n'est plus un corps tubulaire mais constitue un montant vertical sur lequel coulisse un second montant vertical 42, les deux extrémités des montants 41, 42 étant munis d'éléments perpendiculaire aptes à coincer un récipient entre l' élément supérieur 47 du montant fixe 41 et un élément supérieur 45 du montant coulissant 42. Le coulissement vers le bas du montant 42 résulte de la pression du pied 8 sur l'élément 49 formant pédale et provoque l'écrasement de la bouteille 12.

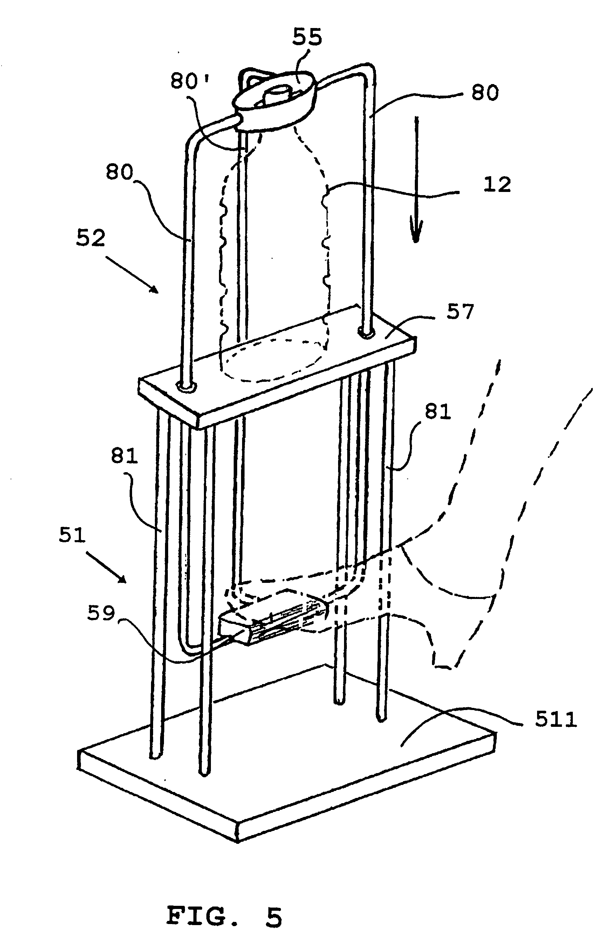

La fig. 5 illustre encore un autre mode de réalisation de l'invention, les parties coulissantes 51 et 52 étant formées essentiellement de tiges ou tubes métalliques. L'élément coulissant 52 est constitué de 3 tubes parallèles 80, pliés aux extrémités et reliant un anneau supérieur 55 et une pédale inférieure 59. Les tubes coulissent à travers une plaque supérieure 57 qui est elle-même reliée par 4 tiges parallèles rigides 81 à une embase 511 formant ainsi ensemble le bâti fixe 51. Le récipient est compressé entre l'anneau 55 et la face supérieure de la plaque 57 formant enclume.

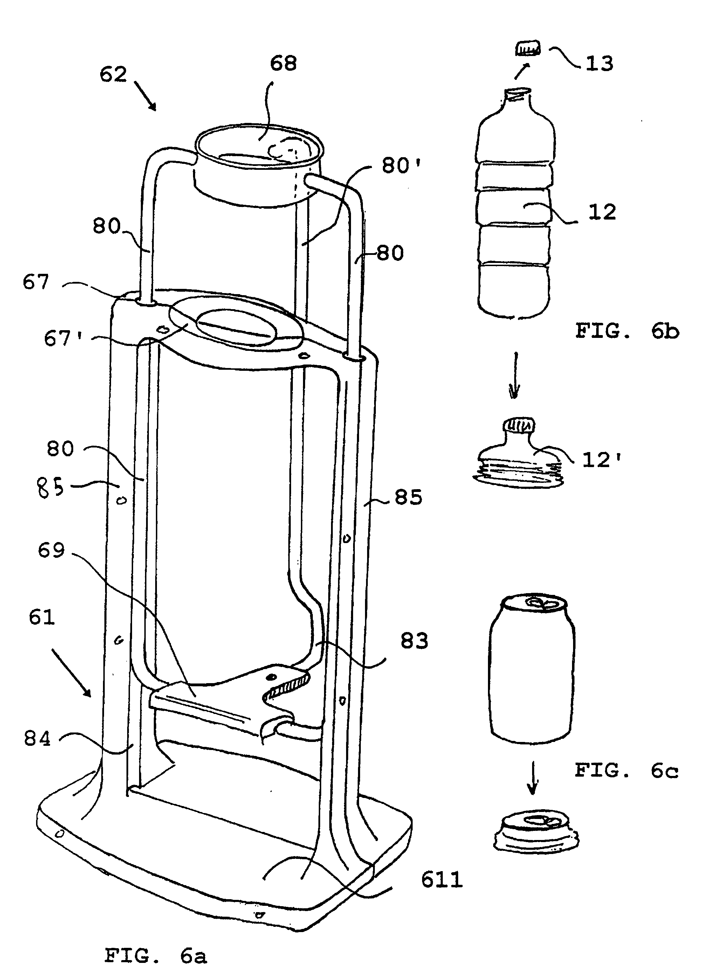

La fig. 6 représente encore un autre mode de réalisation de l'invention. Le bâti 61 est une structure rectangulaire disposé sur une embase 611. Dans cette structure coulissent deux tubes 80 dans des canaux de guidage 84 prévus opposés dans les montants 85. Ces tubes relient l'anneau 68 et la pédale 69. On distingue un renfoncement 67' dans la face supérieure 67 du bâti fixe, apte à mieux épouser la forme du fond d'un récipient à compacter. La troisième tige 80' de la partie coulissante du compacteur présente la particularité d'être renfoncée vers l'extérieur à sa partie inférieure 83 de façon à permettre une introduction plus profonde de la plante du pied de l'utilisateur.

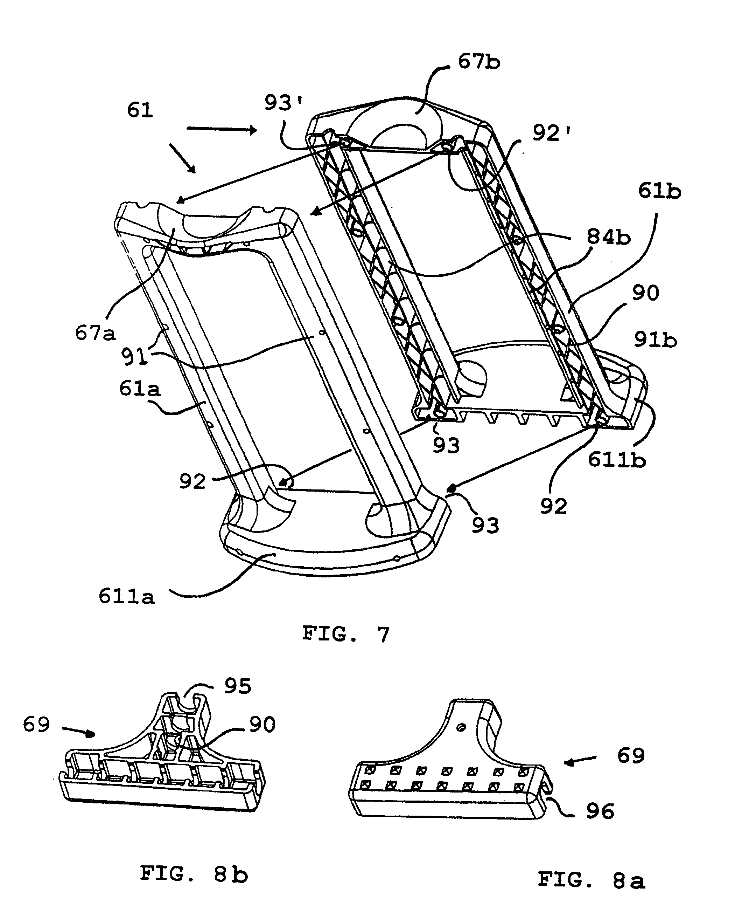

Les fig. 7a et 7b illustrent une forme de réalisation particulièrement avantageuse pour la fabrication d'un compacteur selon la fig. 6. On notera en effet que le bâti fixe peut être constitué de deux pièces identiques 71 et 71' moulées par injection et assemblées avec des vis en 91, des parties 92 en saillie d'une pièce s'adaptant par ailleurs à des ouvertures 93 sur la pièce complémentaire et vice-versa.

Les figs. 8a et 8b illustrent la pédale en forme d'étrier similaire à celle représentée en 69 à la fig. 6a, vue respectivement du dessus et du dessous.

Le reste du compacteur est constitué d'éléments métalliques simples (anneau et tiges pliées) facilement montés, par exemple par clipsage, avant assemblage final des demi-coques 71 et 71') dans des logements 84, 95, 96 prévus sur le bâti et la pédale comme le comprendra l'homme de l'art.

Il est évident que de multiples variations de détails peuvent être prévues dans le cadre de l'invention, la protection recherchée n'étant limitée que par la formulation des revendications.

Ainsi, par exemple, le compacteur pourrait être prévu pour accueillir une bouteille en position inversée, c'est à dire col vers le bas, ce qui pour certaines applications peut être avantageux (vidage complet du contenu du récipient).

On comprendra aussi que l'invention divulgue de manière plus générale un dispositif de compression de matière compressible comprenant deux éléments, p.e. des corps tubulaires, verticaux coulissants l'un dans l'autre, l'élément supérieur étant au moins partiellement fermé à ses deux extrémités et l'élément inférieur étant au moins partiellement fermé à son extrémité supérieure, lesdits éléments présentant chacun au moins un évidement latéral permettant d'une part l'introduction de la matière compressible dans l'élément supérieur déployé par coulissement et d'autre part la plante d'un pied sur l'extrémité inférieure dudit élément supérieur coulissant dans ou autour de l'élément inférieur fixe.

## Revendications

1. Compacteur pour récipient (12) constitué d'un bâti fixe (1, 41, 51, 61) et d'un élément mobile (2, 42, 52, 62) apte à coulisser à l'intérieur ou à l'extérieur du bâti fixe, et à accueillir le récipient (12) entre une partie supérieure de l'élément fixe (7, 47, 57, 67) et une partie supérieure de l'élément mobile (5, 45, 55, 65), l'élément mobile pouvant être soumis à une force verticale vers le bas, force appliquée à sa partie inférieure (9, 49, 59, 69), présente sous la partie supérieure du bâti fixe (7, 47, 57, 67), pour provoquer un coulissement de l'élément mobile (2, 42, 52, 62)) et la compression du récipient (12) entre les faces opposées desdites parties supérieures (7, 47, 57, 67; 5, 45, 55, 65)
**caractérisée en ce que** la force verticale vers le bas peut être appliquée par le pied d'un utilisateur sur un élément d'appui (9, 49, 59, 69) prévu à ladite partie inférieure de l'élément mobile.

2. Compacteur selon la revendication 1 **caractérisé en ce que** les parties latérales du bâti et/ou de l'élément mobile sont constituées au moins d'un ou de plusieurs tiges ou tubes métalliques verticaux (80, 81).

3. Compacteur selon la revendication 1 **caractérisé en ce que** l'élément mobile et le bâti sont constitués de corps tubulaires coulissants l'un dans l'autre et dont une partie de la paroi cylindrique (3, 4) a été découpée longitudinalement.

4. Compacteur selon la revendication 1 **caractérisé en ce que** le bâti et/ou la partie mobile présente une structure tubulaire partiellement évidée apte à recevoir ledit récipient (12).

5. Compacteur selon n'importe laquelle des revendications précédentes **caractérisé en ce que** la partie supérieure (6, 46, 58) de l'élément coulissant (2, 42, 52, 62) est conformé de façon à pouvoir recevoir au moins partiellement le col d'une bouteille.

6. Compacteur selon n'importe laquelle des revendications précédentes **caractérisé en ce que** la partie supérieure de l'élément coulissant comprend une ouverture centrée pour accueillir le col d'une bouteille.

7. Compacteur selon n'importe laquelle des revendications précédentes **caractérisé en ce que** la partie supérieure de l'élément coulissant comprend un élément de forme annulaire.

8. Compacteur selon la revendication précédente **caractérisé en ce que** le diamètre intérieur de l'élément en forme annulaire est légèrement inférieur au diamètre d'une canette.

9. Compacteur selon n'importe laquelle des revendications précédentes **caractérisé en ce que** la partie supérieure du bâti fixe présente une face supérieure qui est conformée de façon à pouvoir recevoir au moins partiellement le fond d'un récipient longitudinal, p.e. une bouteille.

10. Compacteur selon n'importe laquelle des revendications précédentes **caractérisé en ce que** le bâti et la partie mobile sont de dimension, en particulier de hauteur, approximativement égales.

11. Compacteur selon n'importe laquelle des revendications précédentes **caractérisé en ce que** le bâti comprend une embase.

12. Compacteur selon n'importe laquelle des revendications précédentes **caractérisé en ce que** la bâti fixe est formé de deux demi-coques moulées identiques et assemblées, par exemple par vissage.

13. Compacteur selon la revendication précédente **caractérisé en ce que** la partie mobile est essentiellement composée d'au moins deux tubes ou tiges parallèles coulissants dans des gorges prévues dans le bâti fixe, tubes ou tiges reliant un élément supérieur formant élément de compression et un élément inférieur formant point d'appui pour la force exercée vers le bas, par exemple un élément annulaire et une pédale respectivement.

14. Dispositif de compression de matière compressible **caractérisé en ce qu'**il comprend deux corps tubulaires verticaux coulissants l'un dans l'autre, le corps tubulaire supérieur étant au moins partiellement fermé à ses deux extrémités et le corps tubulaire inférieur étant au moins partiellement fermé à son extrémité supérieure, lesdits corps tubulaires présentant chacun au moins un évidement latéral permettant d'une part l'introduction de la matière compressible dans le corps tubulaire supérieur déployé et d'autre part la plante d'un pied sur l'extrémité inférieure dudit corps tubulaire supérieur coulissant dans le corps tubulaire inférieur.

15. Procédé de compression de matières compressibles, en particulier de récipients vides, **caractérisé en ce que** l'on utilise un compacteur ou un dispositif selon n'importe laquelle des revendications précédentes.

## Claims

1. Compactor for a container (12) consisting of a fixed frame (1, 41, 51, 61) and of a mobile element (2, 42, 52, 62) capable of sliding inside or outside the fixed frame, and of receiving the container (12) between an upper part of the fixed element (7, 47, 57, 67) and an upper part of the mobile element (5, 45, 55, 65), the mobile element capable of being subjected to a downward vertical force, this force applied to its lower part (9, 49, 59, 69), present below the upper part of the fixed frame (7, 47, 57, 67), in order to cause a sliding of the mobile element (2, 42, 52, 62) and the compression of the container (12) between the opposite surfaces of the aforesaid upper parts (7, 47, 57, 67; 5, 45, 55, 65)
**characterized in that** the downward vertical force can be applied by a user's foot on a bearing element (9, 49, 59, 69) provided on the aforesaid lower part of the mobile element.

2. Compactor according to claim 1 **characterized in that** the lateral parts of the frame and/or the mobile element consist of at least one or several metallic vertical rods or tubes (80, 81).

3. Compactor according to claim 1 **characterized in that** the mobile element and the frame consist of tubular bodies sliding into one another and of which a part of the cylindrical wall (3, 4) has been cut out longitudinally.

4. Compactor according to claim 1 **characterized in that** the frame and/or the mobile part has a partially hollowed-out tubular structure capable of receiving the aforesaid container (12).

5. Compactor according to any of the preceding claims **characterized in that** the upper part (6, 46, 58) of the sliding element (2, 42, 52, 62) is shaped in a manner so as to be able at least partially to receive the neck of a bottle.

6. Compactor according to any of the preceding claims **characterized in that** the upper part of the sliding element comprises a centered opening for receiving the neck of a bottle.

7. Compactor according to any of the preceding claims **characterized in that** the upper part of the sliding element comprises an annular-shaped element.

8. Compactor according to the preceding claim **characterized in that** the internal diameter of the annular-shaped element is slightly less than the diameter of a can.

9. Compactor according to any of the preceding claims **characterized in that** the upper part of the fixed frame has an upper surface that is shaped in a manner so as to be able at least partially to receive the bottom of a longitudinal container, e.g. a bottle.

10. Compactor according to any of the preceding claims **characterized in that** the frame and the mobile part are of approximately equal dimensions, in particular in height.

11. Compactor according to any of the preceding claims **characterized in that** the frame comprises a base.

12. Compactor according to any of the preceding claims **characterized in that** the fixed frame is formed out of two identical molded half body shells assembled for example by screwing.

13. Compactor according to the preceding claim **characterized in that** the mobile part essentially consists of at least two parallel tubes or rods sliding in grooves provided in the fixed frame, these tubes or rods connecting an upper element forming a compression element and a lower element forming a bearing point for the downward exerted force, for example an annular element and a pedal respectively.

14. Compression device for compressible material **characterized in that** it comprises two vertical tubular bodies sliding into one another, the lower tubular body being at least partially closed at its two extremities and the upper tubular body being at least partially closed at its upper extremity, the aforesaid tubular bodies each having at least one lateral recess enabling on the one hand the insertion of the compressible material in the extended upper tubular body and on the other hand the sole of a foot on the lower extremity of the aforesaid upper tubular body sliding in the lower tubular body.

15. Compression method for compressible materials, in particular empty containers, **characterized in that** a compactor or a device according to any of the preceding claims is used.

## Patentansprüche

1. Kompaktiervorrichtung für ein Gefäß (12), bestehend aus einem festen Rahmen (1, 41, 51, 61) und einem beweglichen Element (2, 42, 52, 62), das derart ausgebildet ist, daß es innerhalb oder außerhalb des festen Rahmens gleitend verschieblich ist, und die derart ausgebildet ist, daß sie das Gefäß (12) zwischen einem oberen Teil des festen Elementes (7, 47, 57, 67) und einem oberen Teil des beweglichen Elementes (5, 45, 55, 65) aufzunehmen vermag, wobei auf das bewegliche Element eine nach unten gerichtete vertikale Kraft ausgeübt werden kann, die auf dessen unteren Teil (9, 49, 59, 69) aufgebracht wird, der unter dem oberen Teil des festen Rahmens (7, 47, 57, 67) angeordnet ist, um eine Verschiebung des beweglichen Elementes (2, 42, 52, 62) und die Komprimierung des Gefäßes (12) zwischen den sich gegenüberliegenden Flächen der besagten oberen Teile (7, 47, 57, 67; 5, 45, 55, 65) zu bewirken, **dadurch gekennzeichnet, daß** die nach unten gerichtete vertikale Kraft von einem Benutzer mit dem Fuß auf ein Betätigungselement (9, 49, 59, 69) aufgebracht werden kann, das an dem besagten unteren Teil des beweglichen Elementes vorgesehen ist.

2. Kompaktiervorrichtung gemäß Anspruch 1, **dadurch gekennzeichnet, daß** die Seitenteile des Rahmens und/oder des beweglichen Elementes aus wenigstens einem oder mehreren vertikalen metallischen Stäben oder Rohren (80, 81) bestehen.

3. Kompaktiervorrichtung gemäß Anspruch 1, **dadurch gekennzeichnet, daß** das bewegliche Element und der Rahmen jeweils aus röhrenförmigen Körpern bestehen, die ineinander gleitend verschieblich angeordnet sind und bei denen ein Teil der zylindrischen wand (3, 4) der Länge nach geschlitzt ist.

4. Kompaktiervorrichtung gemäß Anspruch 1, **dadurch gekennzeichnet, daß** der Rahmen und/oder der bewegliche Teil eine röhrenförmige Struktur aufweisen, die teilweise hohl ausgebildet ist, um das besagte Gefäß (12) aufzunehmen.

5. Kompaktiervorrichtung gemäß einem der vorangehenden Ansprüche, **dadurch gekennzeichnet, daß** der obere Teil (6, 46, 58) des beweglichen Elementes (2, 42, 52, 62) derart ausgebildet ist, daß er zumindest teilweise den Hals einer Flasche aufzunehmen vermag.

6. Kompaktiervorrichtung gemäß einem der vorangehenden Ansprüche, **dadurch gekennzeichnet, daß** der obere Teil des beweglichen Elementes eine zentrische Öffnung aufweist, die derart ausgebildet ist, daß sie den Hals einer Flasche aufzunehmen vermag.

7. Kompaktiervorrichtung gemäß einem der vorangehenden Ansprüche, **dadurch gekennzeichnet, daß** der obere Teil des beweglichen Elementes ein ringförmiges Formelement aufweist.

8. Kompaktiervorrichtung gemäß einem der vorangehenden Ansprüche, **dadurch gekennzeichnet, daß** der innere Durchmesser des ringförmigen Elementes geringfügig kleiner ist als der Durchmesser einer Bierflasche.

9. Kompaktiervorrichtung gemäß einem der vorangehenden Ansprüche, **dadurch gekennzeichnet, daß** der obere Teil des festen Rahmens eine obere Fläche aufweist, die derart ausgebildet ist, daß sie zumindest teilweise den Boden eines länglichen Gefäßes, z. B. einer Flasche, aufzunehmen vermag.

10. Kompaktiervorrichtung gemäß einem der vorangehenden Ansprüche, **dadurch gekennzeichnet, daß** der Rahmen und der bewegliche Teil in ihren Dimensionen, insbesondere hinsichtlich ihrer Höhe, ungefähr gleich sind.

11. Kompaktiervorrichtung gemäß einem der vorangehenden Ansprüche, **dadurch gekennzeichnet, daß** der Rahmen ein Unterteil aufweist.

12. Kompaktiervorrichtung gemäß einem der vorangehenden Ansprüche, **dadurch gekennzeichnet, daß** der feste Rahmen aus zwei identisch geformten Halb-Rümpfen besteht, die zum Beispiel durch Schrauben zusammengefügt sind.

13. Kompaktiervorrichtung gemäß einem der vorangehenden Ansprüche, **dadurch gekennzeichnet, daß** der bewegliche Teil im wesentlichen aus wenigstens zwei parallelen Rohren oder Stäben besteht, die in Führungen, die im festen Rahmen vorgesehen sind, gleitend verschieblich bewegbar sind, wobei die Rohre oder Stäbe über ein oberes Element verbunden sind, das ein Kompressionselement bildet, und ein unteres Element, das den Betätigungspunkt für die nach unten ausgeübte Kraft bildet, zum Beispiel ein ringförmiges Element beziehungsweise ein Pedal.

14. Vorrichtung zur Komprimierung kompressibler Materials, **dadurch gekennzeichnet, daß** diese zwei vertikale röhrenförmige Körper umfaßt, die ineinander gleitend verschieblich sind, wobei der obere röhrenförmige Körper zumindest teilweise an seinen beiden Enden geschlossen ausgebildet ist und der untere röhrenförmige Körper zumindest teilweise an seinem oberen Ende geschlossen ausgebildet ist, wobei die besagten röhrenförmigen Körper jeweils zumindest teilweise eine seitliche Ausnehmung aufweisen, die einerseits das Einbringen des zu verdichtenden Materials in den ausgefahrenen oberen röhrenförmigen Körper und andererseits das Platzieren eines Fußes auf dem unteren Ende des oberen röhrenförmigen Körpers ermöglicht, der im unteren röhrenförmigen Körper verschieblich ist.

15. Verfahren zur Komprimierung kompressibler Materialien. insbesondere von leeren Gefäßen, **dadurch gekennzeichnet, daß** eine Kompaktiervorrichtung oder eine Vorrichtung gemäß einem der vorangehenden Ansprüche verwendet wird.
